# DEMANDE DE BREVET EUROPEEN

(11) **EP 1 416 606 A2**
(43) Date de publication de la demande: **06.05.2004**
(21) Numéro de dépôt: 03292619.8
(22) Date de dépôt: 21.10.2003
(51) Int. Cl.: H02J 13/00

(54) **Système de gestion d'énergie utilisant une transmission par télédiffusion**

(30) Priorité: 31.10.2002 FR 0213648
(71) Demandeur: STMicroelectronics S.A., 92120 Montrouge (FR)
(72) Inventeur: Le Van Suu, Maurice, 77176 Savigny-Le-Temple (FR); Romet, Michel, 95240 Corneilles-en-Parisis (FR)
(74) Mandataire: Bentz, Jean-Paul

(57) **Abrégé**

L'invention concerne un système de gestion d'énergie dans un réseau (DSTR) de distribution d'énergie comprenant une source d'énergie (SE1) et une pluralité de consommateurs d'énergie (K1, K2, K3) répartis en des lieux de consommation respectifs, ce système comprenant l'installation, en chaque lieu de consommation, de moyens répartis d'exploitation d'énergie (RXE) et de moyens répartis de transmission d'informations (RTI), et l'installation dans le réseau (DSTR) de moyens centralisés de gestion de l'énergie distribuée (CGED) et de moyens centralisés de transmission d'informations (CTI) émettant, à destination des moyens répartis d'exploitation d'énergie (RXE), des signaux de commande (SC) transitant par les moyens répartis de transmission d'informations (RTI).

Selon l'invention, l'émission de signaux de commande (SC) est effectuée, au moins pour partie, par télédiffusion

## Description

L'invention concerne, de façon générale, la gestion de la distribution d'énergie à une échelle globale, par exemple à l'échelle d'une région, d'un pays, et d'un groupe de pays.

Plus précisément, l'invention concerne un système de gestion d'énergie dans un réseau de distribution d'énergie comprenant au moins une source d'énergie et une pluralité de consommateurs d'énergie répartis en des lieux de consommation respectifs, tels que des habitations, ce système comprenant. l'installation, en chaque lieu de consommation, de moyens répartis d'exploitation d'énergie et de moyens répartis de transmission d'informations, et l'installation dans le réseau de moyens centralisés de gestion de l'énergie distribuée et de moyens centralisés de transmission d'informations, et ce système comprenant également l'émission, depuis les moyens de transmission centralisés, de signaux de commande émis à destination des moyens répartis d'exploitation d'énergie et transitant par les moyens répartis de transmission d'informations

L'évolution dans certaines régions du monde, la mondialisation, et l'intensification de la concurrence font naître, notamment en Europe, le besoin d'une plus grande souplesse dans la gestion de la distribution de l'énergie, en particulier de l'énergie électrique.

Aujourd'hui, la seule voie de communication descendante établie entre les moyens centralisés de gestion d'énergie et les différents consommateurs est constituée par la télécommande centralisée, qui permet l'envoi de signaux de commande sur les lignes électriques.

Or, cette technique, outre le fait qu'elle est relativement coûteuse, a un débit de transmission très faible qui la confine à des applications peu nombreuses et limitées.

Dans ce contexte, la présente invention a pour but de proposer un système de gestion d'énergie exempt des limitations et inconvénients précédemment évoqués.

A cette fin, le système de l'invention, par ailleurs conforme à la définition générique qu'en donne le préambule ci-dessus, est essentiellement caractérisé en ce que l'émission de signaux de commande est effectuée au moins par télédiffusion, et est de préférence réalisée par l'intermédiaire d'une liaison satellite.

Le système de l'invention est notamment applicable dans le cas où les moyens répartis d'exploitation d'énergie comprennent des moyens répartis de consommation d'énergie et des moyens répartis de gestion d'énergie consommée.

Ce système peut en outre comprendre une opération de transposition par laquelle les signaux de commande reçus en chaque lieu de consommation sont transformés en des signaux de commande transposés par changement de support physique et / ou de format et / ou de codage et / ou de protocole, et une opération de redistribution locale, par laquelle les moyens répartis de transmission d'informations transmettent les signaux de commande transposés aux moyens répartis d'exploitation d'énergie.

Les moyens répartis de transmission d'informations comprennent de préférence un modulateur-démodulateur universel effectuant les opérations de transposition et de redistribution locale.

Dans ce dernier cas, les moyens répartis de transmission d'informations peuvent comprendre, en chaque lieu de consommation, des voies de transmission dédiées reliant respectivement le modulateur-démodulateur universel aux différents moyens répartis d'exploitation d'énergie, deux au moins de ces voies de transmission dédiées utilisant par exemple des supports physiques et / ou des formats et / ou des codages et /ou des protocoles différents.

Certains au moins des signaux de commande émis par les moyens de transmission centralisés peuvent comporter des données d'identification ou d'adressage, auquel cas les moyens répartis de transmission d'informations peuvent transmettre, de façon sélective, les signaux de commande transposés correspondants aux moyens répartis d'exploitation d'énergie, en fonction des données d'identification ou d'adressage qu'ils contiennent.

Dans un exemple de réalisation possible, les signaux de commande en question comprennent des données de tarification.

Le système de l'invention peut avantageusement inclure une opération de téléreport local, par laquelle les moyens répartis de transmission collectent des données de mesure d'énergie consommée issues des moyens répartis de gestion d'énergie consommée.

Ce système peut également comprendre une opération de télérelevé, par laquelle des données de mesure d'énergie consommée issues des moyens répartis de gestion d'énergie consommée sont transposées par changement de support physique et / ou de format et /ou de codage et / ou de protocole, et sont retransmises par les moyens répartis de transmission d'informations aux moyens centralisés de transmission d'informations.

Les moyens répartis de transmission d'informations comprennent par exemple une ligne téléphonique assurant la transmission, à destination des moyens de transmission centralisés, des données de mesure d'énergie consommée, une fois transposées.

Dans un environnement de concurrence entre différents fournisseurs d'énergie, le système de l'invention comprend par exemple une opération d'identification, par laquelle un fournisseur d'énergie exploitant au moins partiellement la source d'énergie à laquelle est relié un consommateur d'énergie est identifié par un code d'identification, et une opération d'enregistrement corrélé, par laquelle le code d'identification du fournisseur de l'énergie consommée par ce consommateur est enregistré dans les moyens répartis d'exploitation d'énergie, et / ou dans les moyens répartis de transmission d'informations de ce consommateur, en association avec une donnée de mesure de la quantité d'énergie consommée.

Le système de l'invention est idéalement applicable au cas où le réseau de distribution d'énergie est un réseau de distribution d'énergie électrique.

Dans ce cas, chaque lieu de consommation est alimenté en énergie par une ligne électrique, et les moyens répartis de transmission d'informations d'un premier au moins des lieux de consommation comprennent de préférence un émetteur-récepteur local branché sur cette ligne électrique et propre à recevoir des signaux de commande transposés émis par le modulateur-démodulateur universel.

Il est alors particulièrement judicieux que l'émetteur-récepteur local du premier lieu de consommation communique avec les moyens répartis d'exploitation d'énergie de ce premier lieu de consommation à travers la ligne électrique.

Le système de l'invention peut aussi avantageusement comprendre une opération de stockage d'information dans laquelle au moins une information appartenant à l'ensemble des informations que constituent : une identification d'un producteur d'énergie, une identification d'un fournisseur d'énergie, une identification d'un tarif d'énergie, et une identification d'un type auquel appartiennent les moyens répartis d'exploitation d'énergie, est stockée dans les moyens répartis de transmission d'informations, et / ou dans les moyens répartis d'exploitation d'énergie de certains au moins des lieux de consommation d'énergie.

Le système de l'invention tel que défini ci-dessus est notamment applicable au contrôle d'échange d'énergie entre au moins deux pays et au déclenchement d'opérations de télérelevé de consommation d'énergie.

D'autres caractéristiques et avantages de l'invention ressortiront clairement de la description qui en est faite ci-après, à titre indicatif et nullement limitatif, en référence aux dessins annexés, dans lesquels :

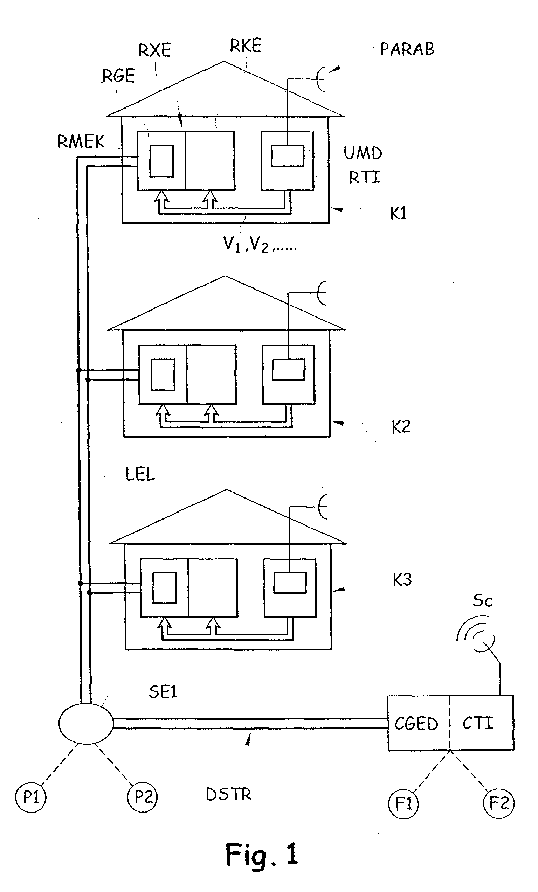

- la figure 1 est un schéma global d'un réseau de distribution d'énergie électrique utilisant un système conforme à l'invention ; et
- la figure 2 est un schéma de l'installation locale d'un consommateur d'énergie, dans un réseau de distribution d'énergie électrique utilisant un système conforme à l'invention.

Comme annoncé précédemment, l'invention concerne un système de gestion d'énergie dans un réseau DSTR de distribution d'énergie.

Un tel réseau de distribution comprend typiquement une ou plusieurs sources d'énergie, telles que SE1, et une pluralité de consommateurs d'énergie, tels que K1, K2, et K3, qui sont répartis dans des lieux respectifs de consommation d'énergie, par exemple dans des habitations respectives.

Dans l'exemple illustré, le réseau de distribution d'énergie DSTR est un réseau de distribution d'énergie électrique, de sorte que la source SE1 est liée aux différents consommateurs d'énergie K1, K2, et K3 par une ligne électrique LEL, symboliquement représentée avec deux conducteurs sur les figures pour la distinguer des voies de transmission d'informations.

La source d'énergie SE1 est exploitée, au moins au plan technique, par un ou plusieurs producteurs d'énergie tels que P1 et P2.

Chaque lieu de consommation est doté de moyens répartis d'exploitation d'énergie RXE, et dé moyens répartis de transmission d'informations RTI.

Le réseau DSTR est doté, en dehors des lieux de consommation d'énergie, de moyens centralisés de gestion de l'énergie distribuée CGED, et de moyens centralisés de transmission d'informations CTI.

Les moyens centralisés de gestion de l'énergie CGED, et de transmission d'informations CTI sont exploités, au moins au plan économique, par un ou plusieurs fournisseurs d'énergie tels que F1 et F2.

La gestion de la distribution, de la consommation et /ou de la tarification d'énergie est notamment réalisée, de façon connue en soi, en émettant, à destination des moyens répartis d'exploitation d'énergie RXE du réseau DSTR, des signaux de commande SC qui sont produits par les moyens de transmission centralisés CTI, et qui transitent, pour chaque consommateur K1, K2, et K3, par les moyens répartis de transmission d'informations RTI de ce consommateur.

Selon un aspect essentiel de l'invention, l'émission de signaux de commande SC est effectuée au moins pour partie par télédiffusion, et de préférence par télédiffusion directe, c'est-à-dire par l'intermédiaire d'une liaison satellite.

Dans ce dernier cas au moins, les signaux de commande SC sont donc reçus par chaque consommateur au moyen d'une antenne telle qu'une antenne parabolique PARAB.

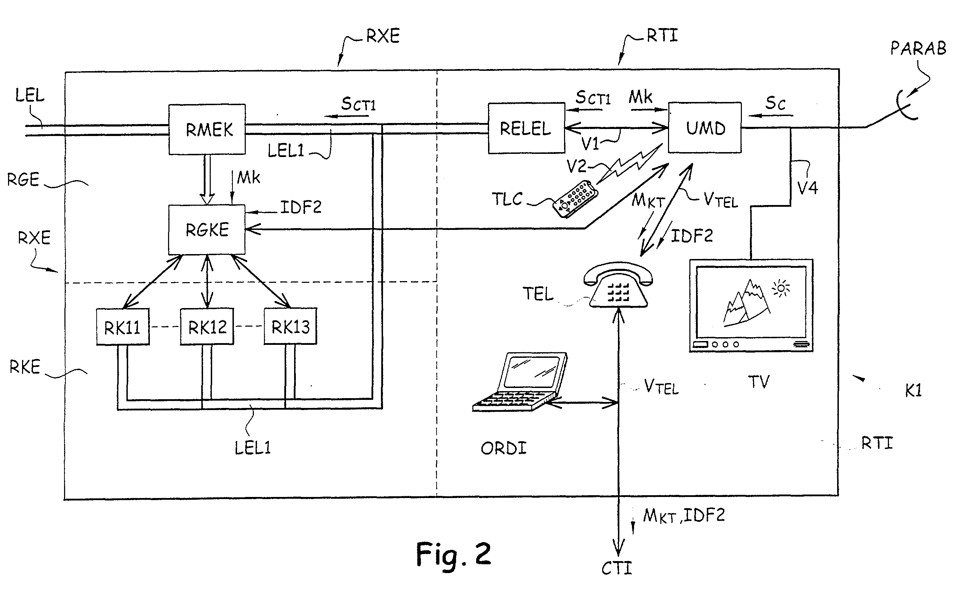

Comme le montre plus précisément la figure 2, qui illustre de façon à la fois schématique et symbolique le lieu de consommation du consommateur K1, les moyens répartis d'exploitation d'énergie RXE comprennent typiquement des moyens répartis de consommation d'énergie RKE et des moyens répartis de gestion d'énergie consommée RGE.

En l'occurrence, les moyens répartis de gestion d'énergie consommée RGE comprennent par exemple un compteur d'énergie électrique RMEK et un circuit de gestion programmable RGKE.

Les moyens répartis de consommation d'énergie RKE comprennent toutes sortes d'appareils consommateurs d'électricité RK11, RK12, RK13, qui sont reliés à la ligne électrique locale LEL1 du consommateur K1, et qui sont pilotés par le circuit de gestion programmable RGKE.

En fonction de signaux qu'il reçoit lui-même ou d'un programme informatique dont il est doté, ce circuit RGKE peut autoriser, interrompre, ou réguler la consommation d'énergie électrique de chacun des appareils tels que RK11, RK12, RK13.

A cet égard, il convient de mentionner que des dispositifs illustrés à la figure 2 comme appartenant aux moyens répartis de transmission d'informations RTI, tels que le récepteur de télévision TV, l'ordinateur ORDI, ou même le téléphone TEL s'il comporte un répondeur, sont aussi des appareils consommateurs d'énergie, et que seul le souci de clarté et de simplicité a conduit à ne pas représenter, sur cette figure, le raccordement de ces appareils à la ligne électrique locale LEL1.

Pour assurer la redistribution locale des signaux de commande SC, le système de l'invention utilise de préférence, en tant que récepteur de ces signaux, un modulateur-démodulateur universel UMD, encore appelé modem universel, par exemple directement relié à l'antenne PARAB.

Ce modem universel UMD, qui peut être réalisé conformément à la demande de brevet américaine publiée sous le numéro US 2002/0101916 A1, est par exemple conçu pour pouvoir émettre et recevoir des signaux codés suivant plusieurs types de modulation différents, et à une multitude de fréquences différentes.

Le modem universel UMD installé en chaque lieu de consommation peut ainsi transposer les signaux de commande SC qu'il reçoit, c'est-à-dire les transformer en des signaux de commande dits "transposés", tels que SCT1 et SCT3, par changement de support physique et /ou de format et / ou de codage et / ou de protocole.

Ce modem universel UMD, qui appartient aux moyens répartis de transmission d'informations RTI, peut ensuite transmettre les signaux de commande transposés, tels que SCT1 et SCT3, aux différents moyens répartis d'exploitation d'énergie RXE, par exemple sur des voies de transmission dédiées, telles que V1, V3, et VTEL, qui utilisent des supports physiques et / ou des formats et / ou des codages et / ou des protocoles différents.

Par exemple (figure 2), la voie V1 relie le modem universel UMD à un émetteur-récepteur local RELEL, qui reçoit, dans un mode de communication qu'il supporte, les signaux de commande transposés SCT1 émis par ce modem UMD.

Cet émetteur-récepteur local RELEL, qui fait lui aussi partie des moyens répartis de transmission d'informations RTI du consommateur K1, est branché sur la ligne électrique locale LEL1 de ce consommateur et peut lui-même communiquer avec les moyens répartis d'exploitation d'énergie RXE de ce consommateur à travers la ligne LEL1, par courant porteur, à la manière d'un interphone.

La voie V3 relie par exemple le modem universel UMD au circuit de gestion programmable RGKE, et la voie VTEL est une ligne téléphonique reliant notamment le modem universel UMD au téléphone TEL et au réseau téléphonique extérieur.

Les signaux de commande SC reçus par le modem UMD, et transformés par lui en signaux de commande transposés tels que SCT1 et SCT3, peuvent être de natures très diverses.

Les signaux de commande transposés peuvent comprendre des données d'identification ou d'adressage, permettant à l'émetteur-récepteur local RELEL de délivrer ses signaux de manière sélective, en fonction des données d'identification ou d'adressage qu'ils contiennent, à l'un des appareils RXE d'exploitation locale d'énergie.

Par exemple, les signaux de commande SCT1 peuvent être adressés spécifiquement au compteur d'électricité RMEK, pour déclencher spécifiquement le transfert de données de mesure d'énergie consommée MK depuis ce compteur vers le circuit de gestion programmable RGKE.

Les signaux de commande transposés peuvent aussi comprendre des données de tarification.

Par exemple, les signaux de commande SCT3 peuvent être adressés spécifiquement au circuit de gestion programmable RGKE pour pondérer des données de mesure d'énergie consommée MK en fonction de l'heure et suivant une tarification donnée.

Dans un autre exemple, les signaux de commande SCT3 peuvent être adressés spécifiquement au circuit de gestion programmable RGKE pour déclencher la retransmission, par ce circuit RGKE, vers le modem universel UMD, et à travers la voie V3, de données de mesure d'énergie consommée MK préalablement reçues par le circuit RGKE en provenance du compteur RMEK

Il est ainsi possible de procéder à des opérations de téléreport local, grâce auxquelles les moyens répartis de transmission RTI peuvent collecter des données de mesure d'énergie consommée MK issues des moyens répartis de gestion d'énergie consommée RGE, et notamment du compteur RMEK.

Une fois que des données de mesure d'énergie consommée MK ont été collectées par le modem UMD, ce dernier peut, en les transposant par changement de support physique et / ou de format et / ou de codage et / ou de protocole, les retransmettre aux moyens centralisés de transmission d'informations CTI.

Comme le montre la figure 2, cette opération de télérelevé peut par exemple être effectuée grâce à la ligne téléphonique VTEL.

Comme en outre le modem UMD peut être commandé par les signaux SC et a accès à la ligne téléphonique VTEL, le système de l'invention permet le déclenchement d'opérations de télérelevé de consommation d'énergie.

D'autres voies de communication impliquant le modem universel UMD peuvent être utilisées, telle qu'une liaison locale par radio ou infra-rouge V2 permettant de télécommander ce modem UMD à partir d'un boîtier TLC, ou telle qu'un câble coaxial V4 par laquelle le récepteur de télévision TV est relié à la fois à l'antenne PARAB et au modem UMD.

Par ailleurs, bien que le circuit de gestion programmable RGKE et le modem UMD aient été représentés séparément, ces deux moyens peuvent très bien aussi être regroupés dans un même boîtier.

Dans le cas où, par exemple, la source d'énergie SE1 alimentant le consommateur K1 est exploitée au plan économique par plusieurs fournisseurs d'énergie F1 et F2, qui partagent l'énergie produite sur une base contractuelle, le consommateur K1 peut choisir de conclure un contrat d'approvisionnement énergétique avec l'un ou l'autre de ces fournisseurs.

Dans ce cas, le système de l'invention comprend par exemple une opération d'identification, par laquelle le fournisseur d'énergie choisi F2 est identifié par un code d'identification IDF2, et une opération d'enregistrement corrélé, par laquelle ce code d'identification IDF2 est enregistré dans les moyens répartis d'exploitation d'énergie RXE, et / ou dans les moyens répartis de transmission d'informations RTI de ce consommateur K1, en association avec les données MK de mesure de l'énergie consommée.

Dans ces conditions, les opérations de télérelevé pourront consister à relever non seulement les données de mesure d'énergie consommée MK, comme décrit précédemment, mais également les codes d'identification correspondants, de sorte que les moyens de gestion centralisés CGED seront en mesure d'établir, pour le consommateur K1 comme pour chaque consommateur, une facture d'énergie consommée pour chaque fournisseur d'énergie choisi.

De façon plus générale, le système de l'invention peut comprendre une opération de stockage d'information consistant à enregistrer dans les moyens répartis de transmission d'informations RTI et / ou dans les moyens répartis d'exploitation d'énergie RXE d'un consommateur d'énergie tel que K1, K2, ou K3, une ou plusieurs informations nécessaires à la gestion de l'énergie, et par exemple une identification d'un producteur d'énergie tel que P1 ou P2, une identification d'un fournisseur d'énergie tel que F1 ou F2, une identification d'un tarif d'énergie applicable, et / ou une identification d'un type auquel appartiennent les moyens répartis d'exploitation d'énergie RXE, et notamment du type de compteur RMEK.

Grâce à ces dispositions, le système de l'invention peut être appliqué au contrôle d'échange d'énergie entre au moins deux pays.

## Revendications

1. Système de gestion d'énergie dans un réseau (DSTR) de distribution d'énergie comprenant au moins une source d'énergie (SE1) et une pluralité de consommateurs d'énergie (K1, K2, K3) répartis en des lieux de consommation respectifs, tels que des habitations, ce système comprenant l'installation, en chaque lieu de consommation, de moyens répartis d'exploitation d'énergie (RXE) et de moyens répartis de transmission d'informations (RTI), et l'installation dans le réseau (DSTR) de moyens centralisés de gestion de l'énergie distribuée (CGED) et de moyens centralisés de transmission d'informations (CTI), et ce système comprenant également l'émission, depuis les moyens de transmission centralisés (CTI), de signaux de commande (SC) émis à destination des moyens répartis d'exploitation d'énergie (RXE) et transitant par les moyens répartis de transmission d'informations (RTI), **caractérisé en ce que** l'émission de signaux de commande (SC) est effectuée par une télédiffusion réalisée par l'intermédiaire d'une liaison satellite.

2. Système de gestion suivant la revendication 1, **caractérisé en ce que** les moyens répartis d'exploitation d'énergie (RXE) comprennent des moyens répartis de consommation d'énergie (RKE) et des moyens répartis de gestion d'énergie consommée (RGE).

3. Système de gestion suivant l'une quelconque des revendications précédentes, **caractérisé en ce qu'**il comprend une opération de transposition par laquelle les signaux de commande (SC) reçus en chaque lieu de consommation sont transformés en des signaux de commande transposés (SCT1, SCT3) par changement de support physique et / ou de format et / ou de codage et / ou de protocole, et une opération de redistribution locale, par laquelle les moyens répartis de transmission d'informations (RTI) transmettent les signaux de commande transposés (SCT1, SCT3) aux moyens répartis d'exploitation d'énergie (RXE).

4. Système de gestion suivant la revendication 3, **caractérisé en ce que** les moyens répartis de transmission d'informations (RTI) comprennent un modulateur-démodulateur universel (UMD) effectuant les opérations de transposition et de redistribution locale.

5. Système de gestion suivant la revendication 4, **caractérisé en ce que** les moyens répartis de transmission d'informations (RTI) comprennent, en chaque lieu de consommation, des voies de transmission dédiées (V1, V3, VTEL) reliant respectivement le modulateur-démodulateur universel (UMD) aux différents moyens répartis d'exploitation d'énergie (RXE).

6. Système de gestion suivant la revendication 5, **caractérisé en ce que** deux au moins des voies de transmission dédiées (V1, VTEL) utilisent des supports physiques et / ou des formats et / ou des codages et /ou des protocoles différents.

7. Système de gestion suivant l'une quelconque des revendications précédentes combinée à la revendication 3, **caractérisé en ce que** certains au moins des signaux de commande (SC) comportent des données d'identification ou d'adressage, et **en ce que** les moyens répartis de transmission d'informations (RTI) transmettent, de façon sélective, les signaux de commande transposés correspondants (SCT1) aux moyens répartis d'exploitation d'énergie (RXE), en fonction des données d'identification ou d'adressage qu'ils contiennent.

8. Système de gestion suivant l'une quelconque des revendications précédentes combinée à la revendication 3, **caractérisé en ce que** les signaux de commande (SC) comprennent des données de tarification.

9. Système de gestion suivant l'une quelconque des revendications précédentes combinée à la revendication 2, **caractérisé en ce qu'**il comprend une opération de téléreport local, par laquelle les moyens répartis de transmission (RTI) collectent des données de mesure d'énergie consommée (MK) issues des moyens répartis de gestion d'énergie consommée (RGE).

10. Système de gestion suivant l'une quelconque des revendications précédentes combinée à la revendication 2, **caractérisé en ce qu'**il comprend une opération de télérelevé, par laquelle des données de mesure d'énergie consommée (MK) issues des moyens répartis de gestion d'énergie consommée (RGE) sont transposées par changement de support physique et / ou de format et /ou de codage et / ou de protocole, et sont retransmises par les moyens répartis de transmission d'informations (RTI) aux moyens centralisés de transmission d'informations (CTI).

11. Système de gestion suivant la revendication 10, **caractérisé en ce que** les moyens répartis de transmission d'informations (RTI) comprennent une ligne téléphonique (VTEL) assurant la transmission, à destination des moyens de transmission centralisés (CTI), des données de mesure d'énergie consommée (MK), une fois transposées.

12. Système de gestion suivant l'une quelconque des revendications précédentes, **caractérisé en ce qu'**il comprend une opération d'identification, par laquelle un fournisseur d'énergie (F2) exploitant au moins partiellement la source d'énergie (SE1) à laquelle est relié un consommateur d'énergie (K1) est identifié par un code d'identification (IDF2), et une opération d'enregistrement corrélé, par laquelle le code d'identification (IDF2) du fournisseur (F2) de l'énergie consommée par ce consommateur (K1) est enregistré dans les moyens répartis d'exploitation d'énergie (RXE), et / ou dans les moyens répartis de transmission d'informations (RTI) de ce consommateur (K1), en association avec une donnée de mesure de la quantité d'énergie consommée (MK).

13. Système de gestion suivant l'une quelconque des revendications précédentes, **caractérisé en ce que** le réseau de distribution d'énergie (DSTR) est un réseau de distribution d'énergie électrique.

14. Système de gestion suivant les revendications 4 et 13, **caractérisé en ce que** chaque lieu de consommation est alimenté en énergie par une ligne électrique (LEL1), et **en ce que** les moyens répartis de transmission d'informations (RTI) d'un premier au moins des lieux de consommation comprennent un émetteur-récepteur local (RELEL) branché sur cette ligne électrique (LEL1) et propre à recevoir des signaux de commande transposés (SCT1) émis par le modulateur-démodulateur universel (UMD).

15. Système de gestion suivant la revendication 14, **caractérisé en ce que** l'émetteur-récepteur local (RELEL) du premier lieu de consommation communique avec les moyens répartis d'exploitation d'énergie (RXE) de ce premier lieu de consommation à travers la ligne électrique (LEL1).

16. Système de gestion suivant l'une quelconque des revendications précédentes, **caractérisé en ce qu'**il comprend une opération de stockage d'information dans laquelle au moins une information appartenant à l'ensemble des informations que constituent : une identification d'un producteur d'énergie (P1, P2), une identification d'un fournisseur d'énergie (F1, F2), une identification d'un tarif d'énergie, et une identification d'un type auquel appartiennent les moyens répartis d'exploitation d'énergie (RXE), est stockée dans les moyens répartis de transmission d'informations (RTI), et / ou dans les moyens répartis d'exploitation d'énergie (RXE) de certains au moins des lieux de consommation d'énergie.

17. Application d'un système de gestion suivant l'une quelconque des revendications précédentes au contrôle d'échange d'énergie entre au moins deux pays.

18. Application d'un système de gestion suivant l'une quelconque des revendications 1 à 16 au déclenchement d'opérations de télérelevé de consommation d'énergie.
